# EUROPEAN PATENT SPECIFICATION

(11) **EP 4 006 473 B1**
(45) Date of publication and mention of the grant of the patent: **14.06.2023**
(21) Application number: 21209999.8
(22) Date of filing: 23.11.2021
(51) Int. Cl.: F28D 1/047, F28F 9/26, F16L 13/02, F16L 13/08, F28F 9/18

(54) **HEAT EXCHANGER PROVIDED WITH A PROTECTION AND REINFORCEMENT DEVICE FOR HEAT EXCHANGER PIPES**
WÄRMETAUSCHER AUSGESTATTET MIT EINER SCHUTZ- UND VERSTÄRKUNGSVORRICHTUNG FÜR WÄRMETAUSCHERROHRE
ÉCHANGEUR DE CHALEUR DOTÉ D'UN DISPOSITIF DE PROTECTION ET DE RENFORT POUR TUYAUX D'ÉCHANGEUR DE CHALEUR

(30) Priority: 25.11.2020 IT 202000028388
(43) Date of publication of application: 01.06.2022
(73) Proprietor: LU-VE S.P.A., 21100 VARESE (IT)
(72) Inventor: BORRONI, Angelo, Uboldo (VA) (IT); FILIPPINI, Stefano, Uboldo (VA) (IT)
(74) Representative: Rastelli, Franco

(56) References cited:
- EP-A1- 2 248 620
- JP-A- H10 197 186
- JP-A- 2015 064 161
- US-A- 2 267 315
- US-A- 2 774 384
- US-A- 4 192 374

## Description

### BACKGROUND OF THE INVENTION

The present invention relates to a protection and reinforcement device for heat exchanger pipes. The invention extends to the heat exchanger provided with this protection and reinforcement device.

As is known, a generic heat exchanger, consisting of an array of pipes and fins, defines a circuit containing a fluid under pressure.

The exchanger has a plurality of pipes which are connected to each other through connection means, such as bends, stub pipes, manifolds, by means of a brazing or welding process.

During the construction of the exchanger, the process of welding/brazing the connection means to the pipes causes a thermal alteration of the pipes, which reduces their resistance, generating an area of weakness.

US 2 267 315 A discloses a method and apparatus for anchoring heat exchange tubes in end plates extending transversely of the tubes. JP H10 197186 A, which discloses the preamble of claim 1, describes a heat exchanger to be used in air conditioning devices to improve the pressure resistant strength of a tubular body having an internal fluid.

### SUMMARY OF THE INVENTION

The purpose of the present invention is to create a heat exchanger with a protecting structure that overcomes the drawbacks of the prior art cited above.

Within this purpose, an object of the invention is to provide a heat exchanger that allows the pressure resistance capability of the pipe of the exchanger itself to be fully exploited thanks also to the contribution provided by the array of fins.

Another object of the invention is to provide an exchanger in which the thermally altered zone is reinforced.

A further object of the present invention is to provide a structure which can be produced using elements and materials commonly available on the market, while also being competitive from an economic point of view.

The present structure, with its peculiar constructional characteristics, is capable of offering the most extensive guarantees of reliability and safety in use.

These and other objects, which will be better highlighted in the following, are achieved with the heat exchanger of claim 1. Preferred embodiments of the invention will be apparent from the remaining claims.

### BRIEF DESCRIPTION OF THE DRAWINGS

Further characteristics and advantages will be apparent from the following description of a preferred embodiment of the invention illustrated, by way of nonlimiting example, in the figures of the attached drawing sheets. In these:
- Figure 1 is an overall perspective view of a known type of heat exchanger;
- Figure 2 illustrates the pipe joints on the outside of a shoulder of the exchanger in Figure 1;
- Figure 3 illustrates an enlarged detail of the joints in Figure 2, in the presence of a failure on the pipe section of the exchanger;
- Figure 4 illustrates a longitudinal cross-section of the joint with failure of Figure 3;
- Figure 5 illustrates a heat exchanger joint, with a section of pipe provided with the protection and reinforcement device of the invention;
- Figure 6 illustrates the joint of Figure 5 in longitudinal cross-section;
- Figure 7 illustrates the detail of the protection and reinforcement device of Figure 5;
- Figure 8 illustrates the detail of Figure 7 in longitudinal cross-section;
- Figure 9 illustrates the pipe joints on the outside of a shoulder of the exchanger of the invention;
- Figure 10 illustrates the pipe joints on the outside of a shoulder of the exchanger of the invention, with a protective and reinforcing structure also mounted on a stub pipe for attachment to the manifold.

### DESCRIPTION OF THE PREFERRED EMBODIMENTS

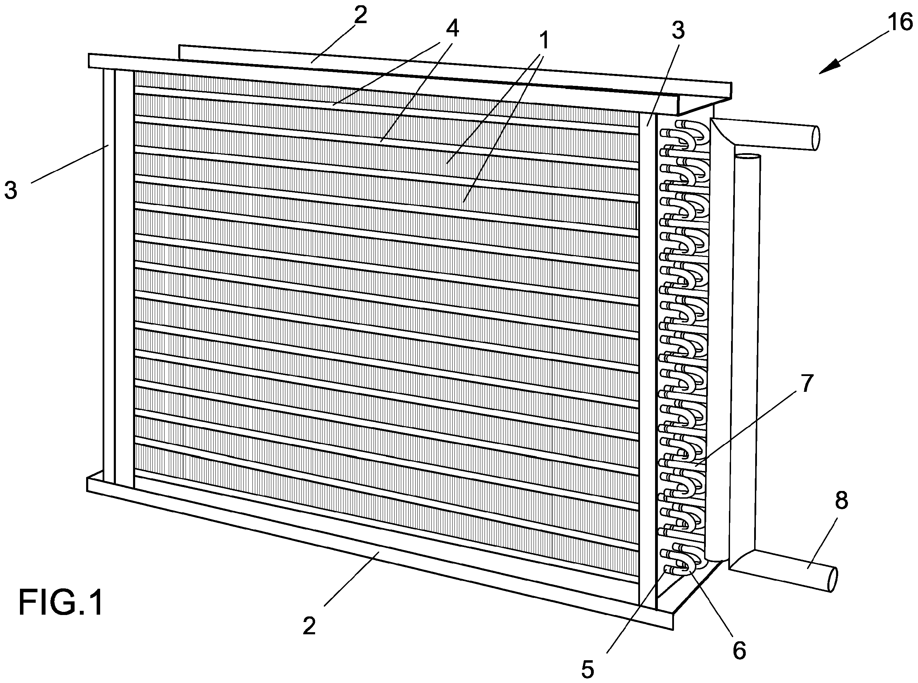

The heat exchanger 16 illustrated in Figure 1 comprises a pack of fins 1, enclosed between two longitudinal covers 2 and two side shoulders 3. The pipes 4 which form the refrigerant fluid circuit are also fixed inside the pack of fins 1.

On at least one of the two shoulders 3 of the exchanger, the pipes 4 protrude for a section 5, joining together by means of corresponding joints 6. Also protruding from these same shoulders 3 are the stub pipes 7 for connection to the inlet and outlet manifolds 8 for the fluid circulating in the pipes 4.

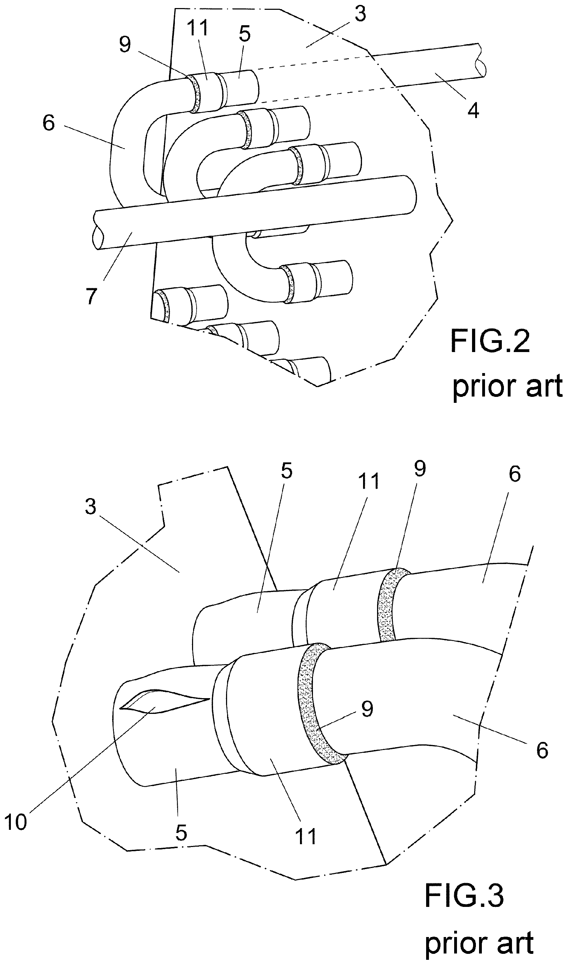

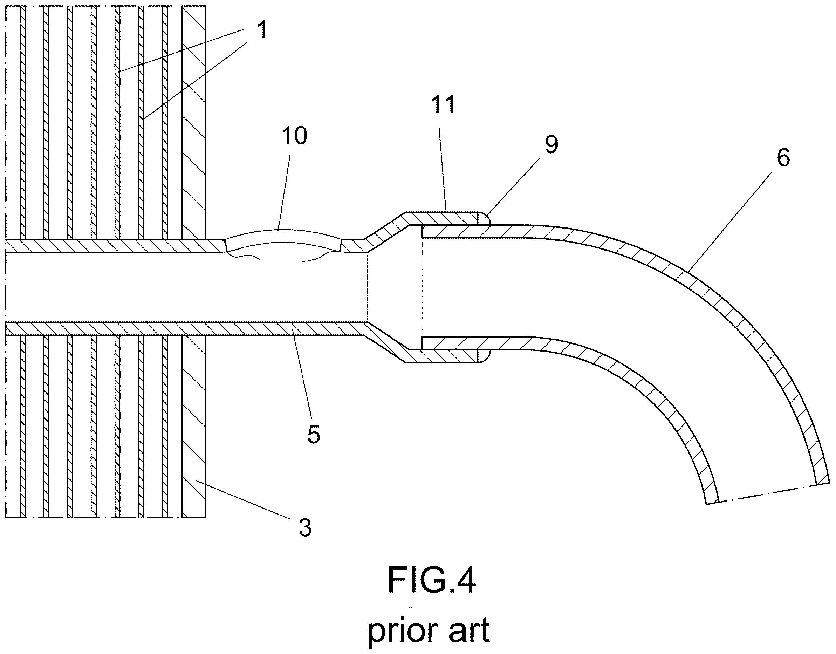

As is better represented in Figures 3 and 4, the joints 6 of the exchangers are fixed to the corresponding sections 5 of the pipes 4 which protrude from the shoulder 3 of the exchanger, by means of a welding or brazing 9, carried out at a widened portion 11 of pipe section 5, inside which the corresponding end of the joint 6 is inserted.

In order to promote the heat exchange with the pack of fins 1, the pipes 4 have a thickness that must be as thin as possible, the required resistance to the internal pressure of the refrigerant fluid being offered by the pack of fins 1 which fasten transversally on these same pipes 4. The sections 5 of these pipes which protrude outside the shoulders of the exchanger are, on the other hand, uncovered or without fins and, both for this reason and due to the structural weakening caused by the welding or brazing operations, these same sections 5 of the pipes 4 are more subject to bursting phenomena, with formation of the tears 10 illustrated in Figures 3 and 4.

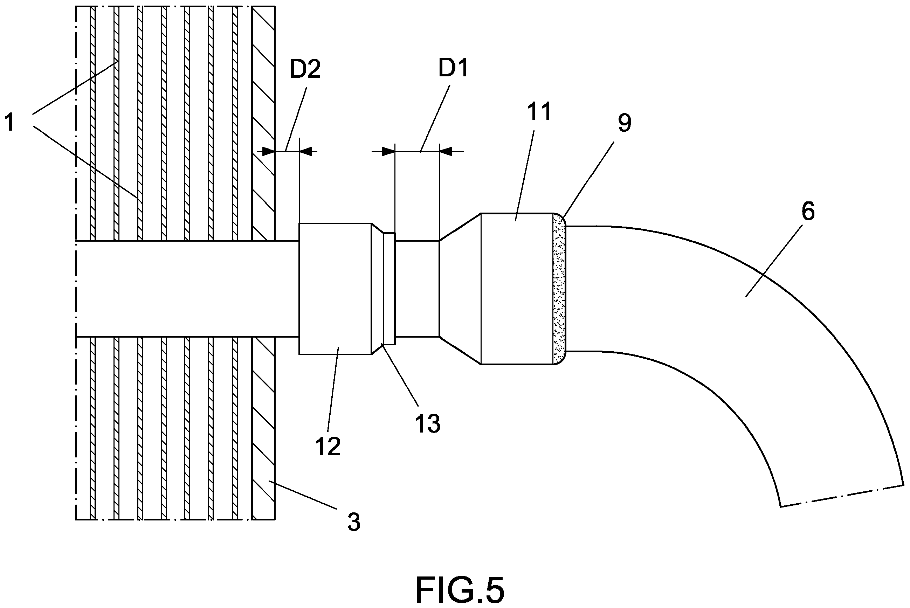

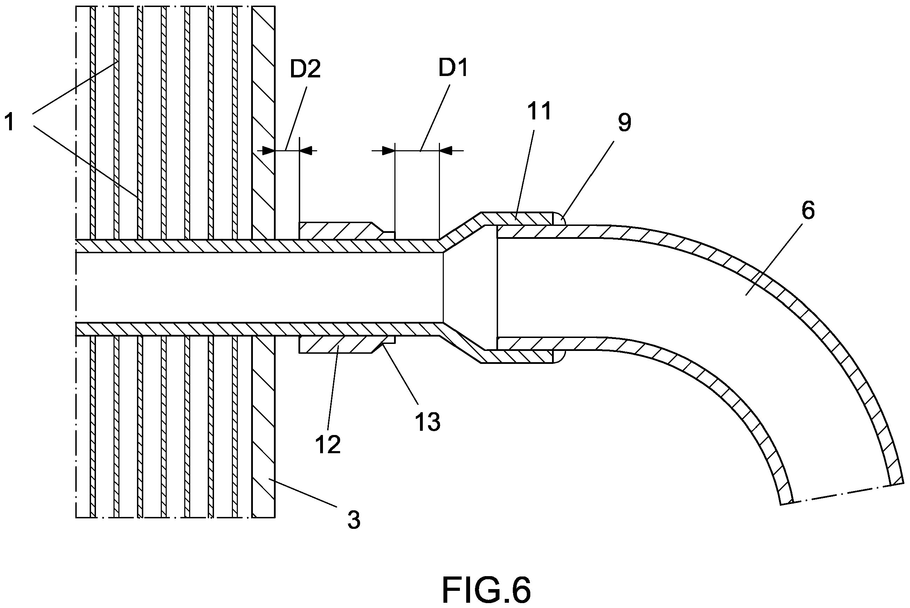

To overcome this drawback, and as better illustrated in Figures 5 and 6, the protection and reinforcement device according to the present invention is applied to the outer surface of the sections 5 of the pipes 4, said device being substantially constituted by a sleeve 12 of metal material (copper, aluminum or similar), provided with an inner longitudinal hole 15. In particular, the sleeve 12 is arranged coaxially on the outer surface of the pipe sections 5, comprised between the shoulder 3 of the exchanger and the widened portion 11 of the pipe sections 5.

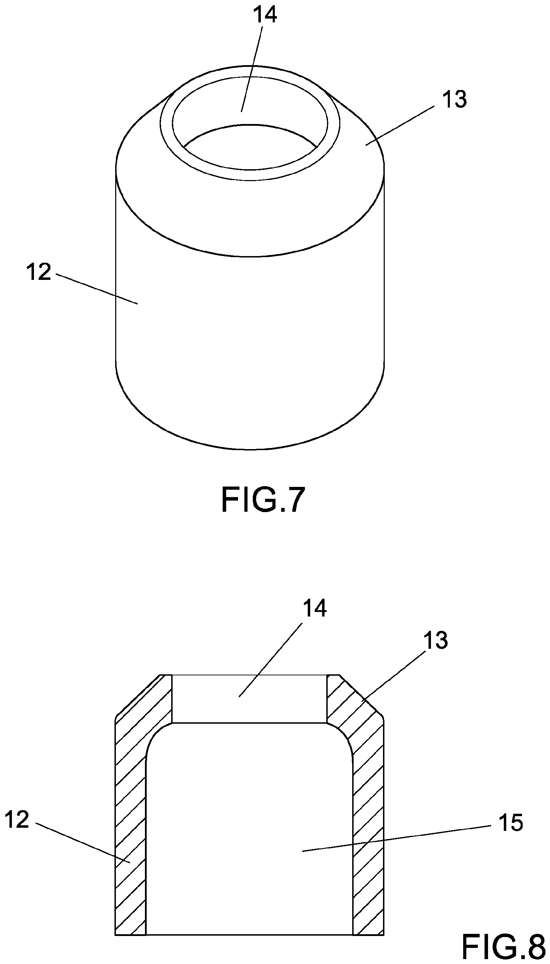

The sleeve 12 of the invention has, at its end facing the widened portion 11 of the pipe section 5, an inner ring-shaped fold or inner ring-shaped cuff 13, obtained for example by embossing, which substantially forms a narrowing 14 of the cross-section of the sleeve inner hole 15 (Figure 8).

In this way, when the sleeve 12 is inserted on the pipe section 5, the subsequent formation of the widened portion 11 of the same pipe section causes the widening to interfere with the fold 13 of the sleeve 12. The latter is then pushed and made to slide along the pipe section 5, in the direction away from the aforementioned widened portion 11, at a distance D1 from the latter (Figures 5 and 6).

The portion D1 of the pipe section 5 not covered by the sleeve 12 has the advantage of allowing partial deformation of the pipe section itself, which does not go so far as a tearing of the same, thanks to the reduced length of this portion, but which to a certain extent compensates for any pressure peaks inside the pipes 4. For the same purpose, it is also possible to maintain a similar distance D2 of the end of the sleeve 12, opposite to that bearing the fold 13, from the shoulder 3 of the exchanger (Figures 5 and 6).

Obviously, the described positioning of the sleeve 12 on the pipe section 5 is obtained by choosing a length, for the sleeve 12, which is sufficiently shorter than that of the aforementioned pipe section.

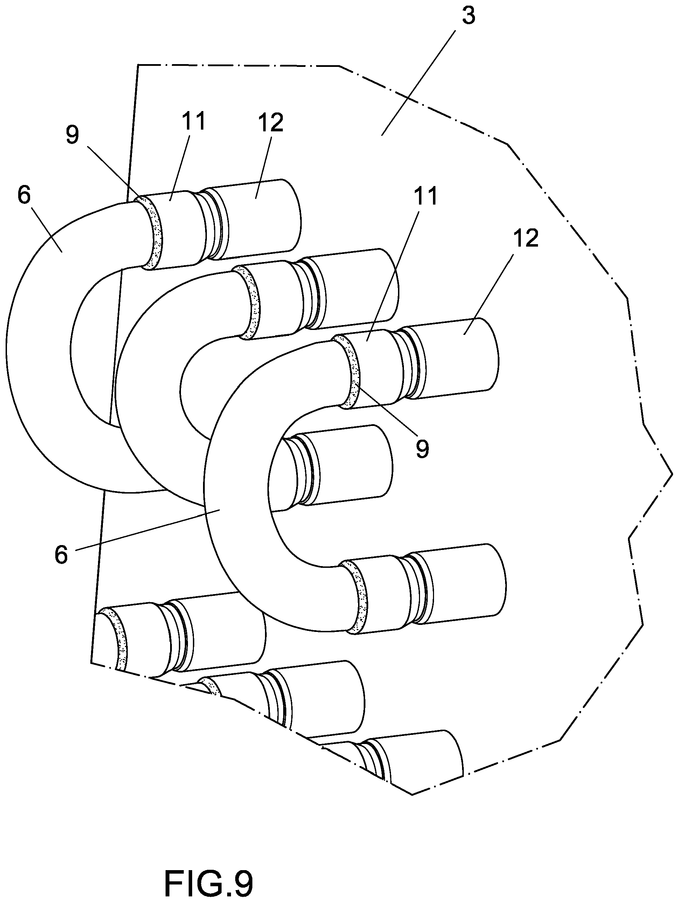

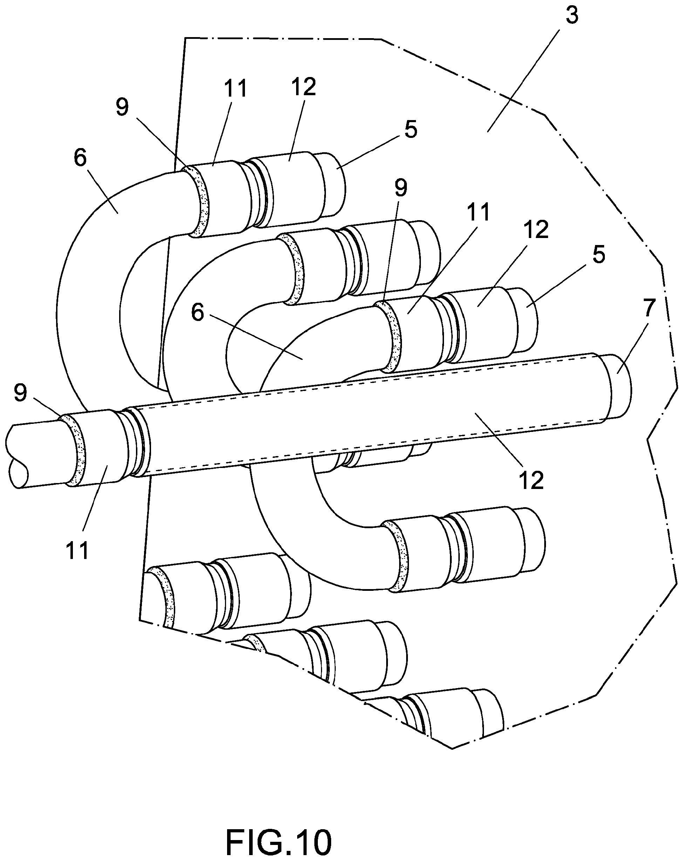

Figure 9 illustrates an example of application of the sleeve 12 on the joints 6 whereas, in Figure 10, the protection structure is applied on the stub pipe 7 connecting to the manifold of the exchanger of the invention.

## Claims

1. Heat exchanger, of the type comprising side shoulders (3), between which the pack of fins (1) and the heat exchange pipes (4) are accommodated, wherein a section (5) of said pipes (4) is arranged protruding outside of at least one of said shoulders (3), joints (6) also being provided for the connection between said pipe sections (5) at respective widened portions (11) of the latter, said pipe sections (5) being provided with a sleeve (12) having an inner longitudinal hole (15), said sleeve (12) being arranged coaxially on a section (5) of said pipes (4), protruding outside the shoulder (3) of the exchanger (16), **characterized in that** at least one end of said sleeve (12) has an inner ring-shaped fold (13), at which, before assembly, a narrowing (14) of the cross section of said hole (15) is formed, and **in that** said ring-shaped fold (13) of said sleeve (12) is placed at a distance (D1) from said widened portion (11) of the pipe sections (5).

2. Exchanger according to claim 1, **characterized in that** the end of the sleeve (12) opposite to that bearing said ring-shaped fold (13) is placed at a distance (D2) from the shoulder (3) of the exchanger.

3. Exchanger according to claim 1, **characterized in that** said reinforcement sleeve (12) is applied to a manifold stub pipe (7).

## Patentansprüche

1. Wärmetauscher des Typs, der Seitenschultern (3) umfasst, zwischen denen der Kühlrippensatz (1) und die Wärmetauscherrohre (4) aufgenommen sind, wobei ein Abschnitt (5) der Rohre (4) außerhalb mindestens einer der Schultern (3) vorstehend angeordnet ist, wobei Verbindungsstücke (6) auch für die Verbindung zwischen den Rohrabschnitten (5) an jeweiligen erweiterten Abschnitten (11) der letzteren vorgesehen sind, wobei die Rohrabschnitte (5) mit einer Hülse (12), die ein inneres Längsloch (15) aufweist, versehen sind, wobei die Hülse (12) koaxial auf einem Abschnitt (5) der Rohre (4), der außerhalb der Schulter (3) des Austauschers (16) vorsteht, angeordnet ist, **dadurch gekennzeichnet, dass** mindestens ein Ende der Hülse (12) eine innere ringförmige Falzung (13) aufweist, an der vor dem Zusammenbau eine Verjüngung (14) des Querschnitts des Lochs (15) ausgebildet wird, und dadurch, dass die ringförmige Falzung (13) der Hülse (12) in einem Abstand (D1) von dem erweiterten Abschnitt (11) der Rohrabschnitte (5) platziert ist.

2. Austauscher nach Anspruch 1, **dadurch gekennzeichnet, dass** das Ende der Hülse (12), das demjenigen gegenüberliegt, das die ringförmige Falzung (13) trägt, in einem Abstand (D2) von der Schulter (3) des Austauschers platziert ist.

3. Austauscher nach Anspruch 1, **dadurch gekennzeichnet, dass** die Verstärkungshülse (12) auf einem Verteilerrohrstutzen (7) aufgebracht ist.

## Revendications

1. Echangeur de chaleur, du type comprenant des épaulements latéraux (3), entre lesquels le bloc d'ailettes (1) et les tuyaux d'échange de chaleur (4) sont logés, dans lequel une section (5) desdits tuyaux (4) est agencée de manière à dépasser vers l'extérieur d'au moins un desdits épaulements (3), des joints (6) sont aussi prévus pour le raccordement entre lesdites sections de tuyaux (5) au niveau des parties élargies respectives (11) de ces dernières, lesdites sections de tuyaux (5) étant pourvues d'un manchon (12) ayant un trou longitudinal intérieur (15), ledit manchon (12) étant agencé coaxialement sur une section (5) desdits tuyaux (4), dépassant vers l'extérieur de l'épaulement (3) de l'échangeur (16), **caractérisé en ce que** au moins une extrémité dudit manchon (12) comporte un pli intérieur de forme annulaire (13), au niveau duquel, avant l'assemblage, un rétrécissement (14) de la section transversale dudit trou (15) est formé, et **en ce que** ledit pli de forme annulaire (13) dudit manchon (12) est placé à une distance (D1) de ladite partie élargie (11) des sections de tuyau (5).

2. Echangeur selon la revendication 1, **caractérisé en ce que** l'extrémité du manchon (12) opposée à celle portant le pli de forme annulaire (13) est placée à une distance (D2) de l'épaulement (3) de l'échangeur.

3. Echangeur selon la revendication 1, **caractérisé en ce que** ledit manchon de renforcement (12) est appliqué sur un tuyau de tubulure de collecteur (7).
